Europäisches Patentamt

European Patent Office

Office européen des brevets

(11) Publication number: **0 474 288 A2**

# EUROPEAN PATENT APPLICATION

(21) Application number: **91202175.5**

(22) Date of filing: **28.08.91**

(51) Int. Cl.5: **A23D 7/00, A23D 9/00, A23L 1/308**

(30) Priority: **03.09.90 GB 9019181**

(43) Date of publication of application:
**11.03.92 Bulletin 92/11**

(84) Designated Contracting States:
**AT BE CH DE DK ES FR GB GR IT LI NL SE**

(71) Applicant: **UNILEVER NV**
**Burgemeester s'Jacobplein 1 P.O. Box 760**
**NL-3000 DK Rotterdam(NL)**
(84) **BE CH DE DK ES FR GR IT LI NL SE AT**

(71) Applicant: **UNILEVER PLC**
**Unilever House Blackfriars P.O. Box 68**
**London EC4P 4BQ(GB)**
(84) **GB**

(72) Inventor: **van Duuren, Jozef Christianus T.**
**Unilever Research Laboratory**
**Olivier van Noortlaan 120, Vlaardingen(NL)**
Inventor: **Elliot, Peter William**
**Unilever Research Laboratory**
**Olivier van Noortlaan 120, Vlaardingen(NL)**

(74) Representative: **Elliott, Peter William et al**
**Unilever N.V. Patent Division P.O. Box 137**
**NL-3130 AC Vlaardingen(NL)**

(54) Low calorie products.

(57) It is known to employ fat replacers, such as sucrose polyesters in food products, to reduce the fat and/or calorie content of the product. Such fat replacers are expensive as compared with fats. The present invention provides food products comprising at least one triglyceride fat, and at least one sugar fatty acid ester as a fat replacer, wherein at least a portion of said fat is present as a population of globules having a mean diameter less than 100 microns, at least a part of said population of globules being invested with a coating of said sugar fatty acid fat replacer such that the globules are protected against the activity of lipase.

EP 0 474 288 A2

The present invention relates to edible low calorie products and in particular to edible low calorie products which contain fats.

Fats comprise a considerable part of the human diet. While a moderate intake of fat is necessary for a balanced diet, a dietary excess of fat can be harmful to health. Consequently, effort has been expended to produce so-called 'fat-replacers' which mimic the behaviour of fats to a greater or lesser extent and which have a lower calorific content than fat.

The organoleptic properties of fatty materials have proved difficult to mimic by the use of non-fatty components as fat replacers. One class of fat-replacers which have shown considerable promise despite these difficulties are the sugar fatty acid esters. The present invention is described with particular reference to sugar fatty acid esters but relates generally to other fat replacers.

The use of sugar fatty acid esters as fat substitutes in margarines is suggested in EP 290421 (Orphanos et al.: to the Proctor & Gamble Company). Such margarines have a "fatty" phase which generally comprises one or more triacylglyceride fats and one or more fat-replacers mixed intimately or in mutual solution. Food products are also envisaged which contain no triacylglyceride but have a "fat" phase consisting essentially of one or more fat-replacers. Further reference to edible fat-replacers can be found in US 4005195, 4005196 and EP published patents 223856, 236288 and 235836.

The use of sucrose polyester in non-intimate mixture with edible fats is decribed in DE 3003401. In that specification is disclosed the use of small spheres of sucrose polyester dispersed throughout an edible fatty or milk-based matrix.

Further detail on the manufacture of polyol, particularly sugar fatty acid ester (hereafter indicated as 'SPE') fat-replacers can be found in US patent 3600186 (Mattson et al.: to the Proctor & Gamble Company). That document describes low-calorie, fatty food compositions in which a portion of the triacylglyceride fat is replaced with a sugar fatty acid polyester such as a sucrose fatty acid ester in which at least four of the hydroxyl groups have been esterified with a fatty acid of claim length from 8-22 carbons. It is generally believed that the indigestibility of the SPE's is due to an inability of gut lipase to cleave fatty acids from the polyol core of the molecule.

Other fat-replacers are known, including waxes such as jojoba and other polyol fatty acid esters.

The advantage of using polyol, particularly sugar, fatty acid esters as fat replacers in edible products is that these fat-replacers are generally indigestible in the human or animal gut and do not therefore contribute to the total calorific content of the diet. In addition, it is believed that extensive use of these products may cause a lowering of blood cholesterol. There is a need, at least in certain forms of medical treatment, for such edible products.

There are problems accompanying the use of sugar polyester as a fat replacer. Not least of these are the relatively high cost of SPE's, which may preclude their use in some foodstuffs and the as yet unknown effects of long term ingestion of large quantities of SPE's.

We have now determined how the fat-replacing effect of an SPE may be greatly enhanced, allowing a relatively small quantity of SPE to have a relatively large calorie reducing effect.

The invention subsists in using the SPE to form a barrier between the edible fat content of a foodstuff and the digestive enzymes present in the gut.

The present invention provides a structured edible composition comprising a triglyceride fat and a lipase resistant fat replacer, CHARACTERISED IN THAT the digestibility of the structured composition is less than the digestibility of a homogeneous mixture of the components of said composition.

We have determined that in such a configuration the rate of lipolysis of triglyceride fats present as globules coated with a layer of polyol fatty acid polyester is reduced as compared with free fat globules or globules comprising a simple, homogeneous mixture of polyol fatty acid polyester and triglyceride fats.

A further aspect of the present invention provides a food product comprising at least one triglyceride fat, wherein at least a portion of said fat is present as a population of globules having a mean diameter less than 1mm, CHARACTERISED IN THAT at least a part of said population of globules are invested with a coating of at least one polyol fatty acid polyester.

It is important that the coated globules are not too large, as large globules would be damaged by mechanical action in the mouth. The coated globules exhibit characteristic physical features which enable their presence to be detected provided that the size of the globules is sufficiently small.

A further aspect of the present invention provides a food product comprising at least one triglyceride fat, and at least one polyol fatty acid polyester as a fat replacer, wherein at least a portion of said fat is present as a population of globules having a mean diameter less than 100 microns, CHARACTERISED IN THAT at least a part of said population of globules exhibit a maltese cross pattern when observed at visible wavelengths using dark-field polarising microscopy.

It is believed that the effect of the coating is to sterically hinder the interaction of lipolytic enzymes with

2

the fat in the globule. This prevents the release and subsequent uptake of fat in the gut. Thus, in the present invention SPE functions not only as a fat replacer but as a strong antagonist for the lipolysis of fat.

Accordingly, a further aspect of the present invention subsists in the use of polyol fatty acid polyester as an antagonist for the lipolysis of fat.

It is believed that up to 90% reduction in the rate of lipolysis can be obtained by the presence of 10% sugar polyester on product.

Accordingly, a further aspect of the present invention provides a food product comprising at least one sugar fatty acid ester and at least one triglyceride fat, CHARACTERISED IN THAT, enzymatic hydrolysis of at least a portion of the triglyceride fat is (sterically) hindered by the presence of a coating of the polyol fatty acid polyester.

Experimental evidence which is discussed in more detail below shows that this coating is stable at and above body temperature.

Typically, the food product comprises an oil-in water emulsion cream, consisting of a dispersion of sugar polyester coated triglyceride globules in an aqueous phase. This cream may comprise the product per se or may may be dispered through further material such as in an O/W/O duplex emulsion.

Preferably the mean diameter of the globules is in the range 1-40 microns, more preferably 1-20 microns, most preferably 1-10 microns. Creams with a mean globule diameter of 2-5 microns are especially useful in the foods industry.

There are a number of ways of synthesising sucrose fatty acid esters. One suitable sugar polyester for use in embodiments of the present invention is that formed by esterification of sucrose with a blend of partially hardened bean soya bean oils. More preferably a blend of 55% bean oil hardened to a slip melting point of 65°C with 45% of 'moldo-hardened' bean oil, hardened to a slip melting point of 28°C.

In embodiments of the invention it is preferred to use a sugar polyester with a solids content at 35°C of 20-100% as determined by pulsed NMR. More preferably the solids content at 35°C should be in the range 50-100%.

The triglyceride fat comprising the core of the globule can be obtained from a variety of sources. Preferably the fat is a vegetable tryglyceride having a low content of saturated fat such as a linoleic acid oil or an oleic acid oil. It is envisaged that fats rich in palmitic acid can also be used. While vegetable oils are preferred for health reasons, the use of animal fats such as butter-fat or lard is not excluded.

As mentioned above, products according to the present invention can comprise creams. Creams are a dispersion of fatty globules in an aqueous medium. In products which embody the present invention it is envisaged that either some, preferably a major part or all of the cream globules are invested in a protective layer of sugar polyester, preferably sucrose polyester. The preferred fat content of the cream is 60-10%, preferably 40-15%. The preferred level of SPE present in the cream is less than 50%wt of the fat content of the cream.

One particular embodiment of the present invention subsists in a food product comprising a 60-10wt% (on food product) of a dispersion of edible triglyceride in an aqueous phase and 30-5%wt on product of a lipase-resistant fat replacer, at least a part of said triglyceride being present in the form of globules having a mean diameter in the sange 1-40 microns, and at least a part of said lipase resistant fat replacer being present as a shell investing said globules.

Products according to the present invention can also comprise spreads containing coated globules. Globules of fat are present in some spreads and assist in controling the texture of those spreads. Butter is well-known to contain so-called 'butter-globules' which are produced in the manufacture of the butter by churning. Globules can be produced by so-called "VOTATOR" processing as is often used in the manufacture of spreads.

In order that the present invention may be better understood it will be illustrated hereafter by way of example and with reference to the accompanying figures wherein:

Figures 1A, 1B and 1C are electron photomicrographs of prepared specimens product of creams A, C and G respectively.

Figure 2 is a graph showing the NaOH addition required to maintain the pH against time for creams A-G incubated with a lipase at room temperature.

PREPARATION OF CREAMS:

Oil in water emulsion creams A to G were prepared with the following fat phase compositions (all figures indicate %wt on cream);

| Ingredients | A | B | C | D | E | F | G |
|---|---|---|---|---|---|---|---|
| Sunflower oil | 20 | 20 | 20 | 20 | 20 | 20 | 20 |
| SPE '(B)' | - | 10 | 5 | - | - | - | - |
| SPE '(D)' | - | - | - | 10 | - | - | - |
| SPE '(E)' | - | - | - | - | 10 | - | - |
| SPE '(F)' | - | - | - | - | - | 10 | - |
| SPE '(G)' | - | - | - | - | - | - | 10 |

In addition, the creams each comprised 9%wt buttermilk powder, 0.1% guar gum and water up to 100%wt.

Cream A is a control comprising no SPE. Creams B and C are food products according to the present invention, comprising an SPE '(B)' formed by esterification of sucrose with a blend of partially and fully hardened soya oils. More preferably a blend of 55% bean oil hardened to a slip melting point of 65°C with 45% of 'moldo-hardened' bean oil, hardened to a slip melting point of 28°C. Creams D-G each comprised 10%wt of one of the SPE's of type 'D'-'G'.

Where available, the N-lines of the fatty components employed in the creams are given below, together with the hydroxyl value:

| Component | N20 | N30 | N35 | N40 | N45 | OH |
|---|---|---|---|---|---|---|
| Sunflower oil | 0 | 0 | 0 | 0 | 0 | - |
| SPE '(B)' | 63.8 | 44.0 | 22.6 | 7.8 | 1.6 | 9.3 |
| SPE '(D)' | 77.7 | 64.6 | 51.5 | 33.1 | 18.0 | 8.5 |
| SPE '(E)' | 51.9 | 17.0 | 6.7 | - | - | 2.9 |
| SPE '(F)' | 80.1 | 47.3 | 17.9 | 0.7 | - | 1.1 |
| SPE '(G)' | 96.2 | 95.7 | 95.6 | 94.6 | 93.6 | - |

The buttermilk powder and the guar gum were dissolved in hot water at approx. 60°C. The sunflower oil and the SPE components were mixed at 60°C. These fat phases were combined with the water phases using an Ultra Turrax (RTM) mixer.

The pre-emulsion was homogenised with a Rannie homogeniser. The Rannie was operated with no pressure drop across the first step and a pressure of 20 bar across the second. The homogenisation temperature was approx. 60°C. The throughput was 60 kg/hr. The cream was recirculated three times and subsequently filled into jars and cooled to 5°C.

DROPLET SIZE ANALYSIS:

The D 3.2 of the cream was measured with a Coulter Counter (RTM). For this analyses the dispersant was 1 % Dobanol (RTM) and the electrolyte Isoton II (RTM). The results of these analyses were that cream A had a mean droplet diameter of 2.3 $\mu$M and cream B had a mean droplet diameter of 2.4 $\mu$M. It is noted that the cream B contained the SPE in addition to the sunflower oil. Comparable droplet sizes were obtained for creams 'C' to 'G'.

From these figures, it can be seen that both creams had about the same fat droplet size distribution. This was confirmed by the microscope studies discusssed below.

ELECTRON MICROSCOPE STUDIES:

Prepared specimens of cream B were imaged with low-temperature Scanning Electron Microscopy (SEM). Specimens were prepared by freezing with liquid nitrogen and fracture to exhibit the internal structure. The specimens were examined in the SEM at about -150 °C.

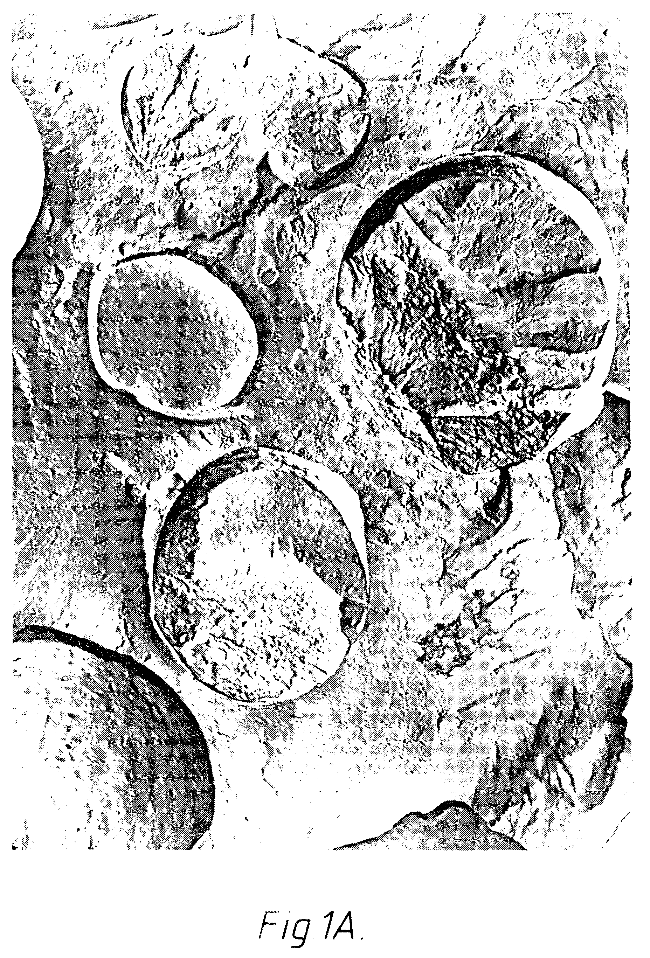

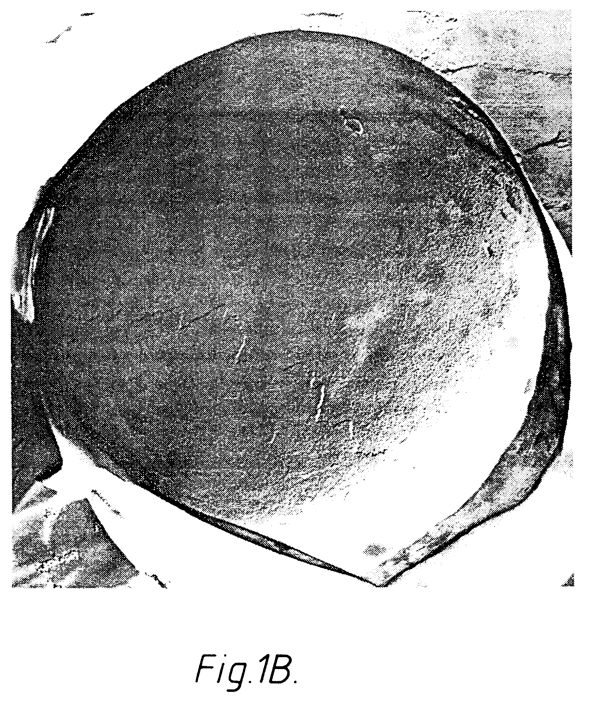

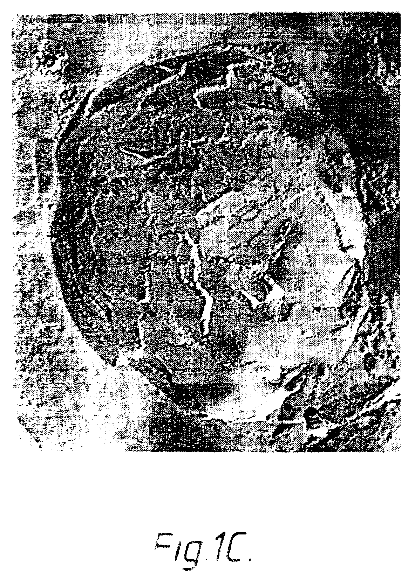

Figures 1A, 1B and 1C are electron photomicrographs of prepared specimens product of creams A, C and G respectively.

In each of figures 1A-1C one or more spheres of fatty material can be recognised in a frozen aqueous matrix. The very small spheres visible in some of the micrographs are casein particles.

In Figure 1A (Cream A), sample fracture has occurred through the visible fat globules. Such a fracture type indicates that there is no shell structure around the globule. It is noted that cream A did not contain

4

EP 0 474 288 A2

any SPE.

In Figure 1B (Cream C), sample fracture has occurred around the outer surface of the globule. Some indications can be seen of the presence of a shell-like structure surrounding the globule.

In Figure 1C (Cream G), sample fracture has occurred around the outer surface of the globule. The plate-like structure visible on the surface of the globule, is believed to be due to fracture occurring between layers of a shell-like structure on the surface.

The abovementioned photomicrographs indicate that a shell is formed on the surface of the globules in creams containing SPE.

## LIGHT MICROSCOPE STUDIES:

Light microscope studies were performed by examination of a thin smear of the sample using a Zeiss microscope equipped with a temperature controlled stage. Both normal and polarised light was used. The latter to visualise the crystalline structures in the samples by a dark field method.

Photomicrographs of samples of creams B-G were obtained in the light microscope while the temperature of the sample is cycled between 23 and 36°C (temperature values are indicative and not calibrated). In the images taken with crossed polarizers spheres surrounded by a birefringent shell and some larger birefringent spheres could be discerned.

The spheres are believed to be sunflower oil-containing droplets surrounded by a SPE shell. The texture of the product is that of an unguent, i.e. fatty, and no separate phases are present. The lack of phase separation suggests that most of the sunflower oil is encapsulated, otherwise separation of water and free SF should occur in the continuous phase. Cycling between 23 and 36 °C showed a stable structure over this temperature range.

For cream B, raising the temperature up to 42°C, well above human body temperature, does not substantially disturb the structure. Loss of structure was observed at 47°C.

## ENZYME STUDIES:

The accessibility of the triglyceride fat to the lipase of Pseudomonas glumae was determined. In vitro enzymatic activity measurements were conducted as follows;

75 µl aliquots of the creams were diluted with assay buffer (5mM Tris, 40mM NaCl, 20mM CaCl2) in a cuvet and the pH was adjusted at 9.0,

20 µl enzymes (50 lipase units) were added to the diluted cream at room temperature. Under such conditions the availablity of enzyme is not limiting as an excess of enzyme is present. The progress of the reaction was followed by back titration of fatty acids liberated against 0.05 Normal NaOH solution, maintaining the pH at 9.0. The activity of the lipase is determined as a function of the alkali addition required to keep the pH constant. The assay was performed in a Radiometer pH-stat (RTM) device.

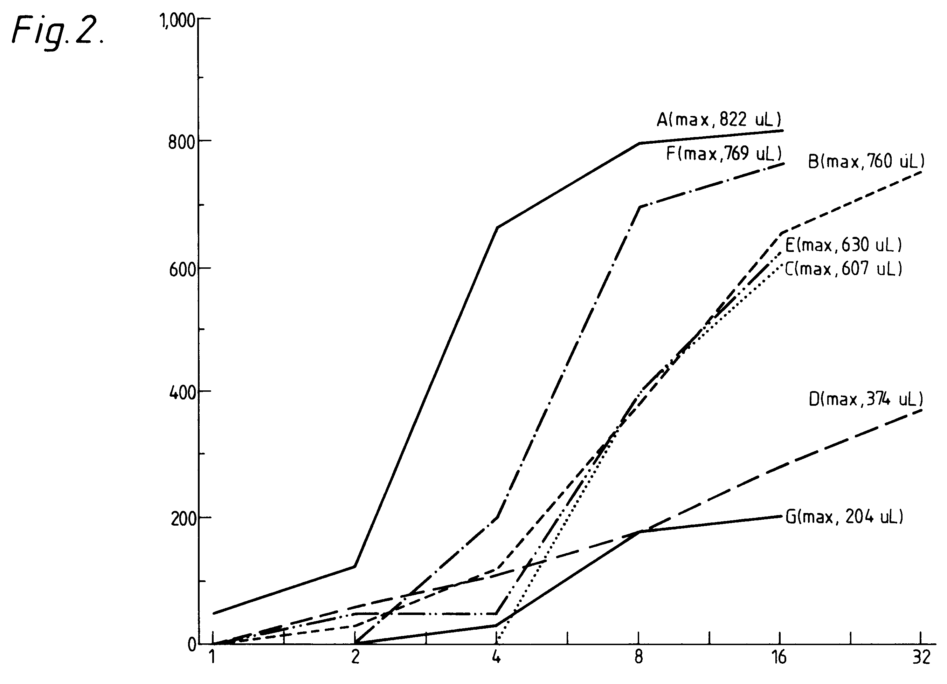

Typical results are given in figure 2. The progressive and final titres of NaOH required to neutralise the fatty acid released are repeated below:

| Time (Minutes) | A | B | C | D | E | F | G |
|---|---|---|---|---|---|---|---|
| 1 | 50 | 0 | 0 | 0 | 0 | 0 | 0 |
| 2 | 124 | 30 | 0 | 60 | 50 | 0 | 0 |
| 4 | 668 | 120 | 0 | 110 | 50 | 200 | 30 |
| 8 | 801 | 380 | 400 | 180 | 400 | 700 | 180 |
| 16 | 822 | 660 | 607 | 282 | 630 | 769 | 204 |
| 32 | – | 760 | – | 374 | – | – | – |
| Final | 822 | 760 | 607 | 374 | 630 | 769 | 204 |

From the enzymatic activity measurements, it is clear that the lipase activity was lower in the creams B-G (with SPE) than in the product A (prepared without SPE).

The most effective results were obtained with creams G and D, both of which have relatively high melting points and a high solids content at a temperature of 40 degrees centigrade. Acceptable results were obtained with creams C, and E.

While the conditions prevalent in the assay cuvette are not equivalent to those persisting in the gut, it is noted that the enzyme:substrate ratio in the cuvette is extremely high compared with that found in the gut and therefore it is expected that lipolysis will proceed much more slowly in the gut. From these results it can be expected that providing the physical interrelation of the SPE and the triglyceride fat is appropriate, a relatively small amount of SPE can have a major reducing effect in fatty acid release.

**Claims**

1. A structured edible composition comprising a triglyceride fat and a lipase-resistant fat replacer, CHARACTERISED IN THAT the digestibility of the structured composition is less than the digestibility of a homogeneous mixture of the components of said composition.

2. A food product comprising at least one triglyceride fat, wherein at least a portion of said fat is present as a population of globules having a mean diameter less than 1mm, CHARACTERISED IN THAT at least a part of said population of globules are invested with a coating of at least one polyol fatty acid polyester.

3. A food product comprising at least one triglyceride fat, and at least one polyol fatty acid polyester as a fat replacer, wherein at least a portion of said fat is present as a population of globules having a mean diameter less than 100 microns, CHARACTERISED IN THAT at least a part of said population of globules exhibit a maltese cross pattern when observed at visible wavelengths using dark-field polarising microscopy.

4. The use of SPE as an antagonist for the lipolysis of fat.

5. A food product comprising at least one polyol fatty acid polyester and at least one triglyceride fat, CHARACTERISED IN THAT, enzymatic hydrolysis of at least a portion of the triglyceride fat is hindered by the presence of a coating of the polyol fatty acid polyester.

6. A food product according to any one of claims 1-3 or 5, comprising an oil-in water emulsion cream, said cream consisting of a dispersion of sugar, preferably sucrose, polyester coated triglyceride globules in an aqueous phase.

7. A food product according to claim 2, 3 or 6 wherein the mean diameter of the globules is in the range 1-40 microns, preferably 1-20 microns, more preferably 1-10 microns.

8. A food product according to claim 1 wherein the lipase-resistant fat replacer is a polyol fatty acid polyester, preferably a sugar fatty acid poly.

9. A food product according to any one of claims 2-8 wherein the polyol, preferably sugar, preferably sucrose, polyester has a solids content at 35°C of 20-100% as determined by pulsed NMR, preferably the solids content at 35°C falls in the range 50-100%.

Fig 1A.

Fig.1B.

Fig.1C.

Fig.2.

EP 0 474 288 A2